# EUROPÄISCHE PATENTSCHRIFT

(11) **EP 1 135 584 B1**
(45) Veröffentlichungstag und Bekanntmachung des Hinweises auf die Patenterteilung: **05.03.2003**
(21) Anmeldenummer: 99958034.3
(22) Anmeldetag: 13.11.1999
(51) Int. Cl.: F02B 27/02

(54) **VERSTELLBARES SAUGROHR**
ADJUSTABLE SUCTION PIPE
TUBULURE D'ADMISSION REGLABLE

(30) Priorität: 03.12.1998 DE 19855734
(43) Veröffentlichungstag der Anmeldung: 26.09.2001
(73) Patentinhaber: FILTERWERK MANN & HUMMEL GmbH, 71631 Ludwigsburg (DE)
(72) Erfinder: LEIPELT, Rudolf, D-74394 Hessigheim (DE); WEBER, Olaf, D-71292 Friolzheim (DE)
(74) Vertreter: Voth, Gerhard, Dipl.-Ing.
(86) Internationale Anmeldenummer: EP9908755
(87) Internationale Veröffentlichungsnummer: WO00032915

(56) Entgegenhaltungen:
- WO-A-98/35146
- DE-A- 3 940 486
- DE-U- 9 303 172
- GB-A- 1 012 425
- GB-A- 2 160 264

## Beschreibung

### Stand der Technik

Die Erfindung betrifft ein verstellbares Saugrohr, insbesondere zur Luftzuführung von Verbrennungsluft in eine Verbrennungskraftmaschine, wobei die Verstellung durch ein Stellelement gewährleistet wird, welches gleichzeitig der Sammelraum des Saugrohrs ist.

Derartige verstellbare Saugrohre sind bekannt z. B. aus der DE 36 08 310. Die Ansaugluft wird in einen hohlzylindrischen Stellkörper geleitet, der als Sammelraum dient. Die äußere Wand des Stellkörpers bildet zusammen mit den Innenwänden des Saugrohrgehäuses die ringförmigen Ansaugkanäle, die zu den Zylindern führen. Durch Drehung des Stellkörpers kann die Winkellage der Durchgangsöffnung zwischen Sammelraum und Saugkanälen verstellt werden. Auf diese Weise wird eine stufenlose Verstellung der Saugkanallänge möglich, wodurch die Schwingungsverhältnisse im Saugrohr optimal an den Lastzustand der Verbrennungskraftmaschine angepaßt werden können.

Werden die Saugkanäle zu den Zylindern ringförmig um den Sammelraum angeordnet, so wird der Umfang des Sammelraums und somit auch sein Volumen durch die geforderte Länge der Saugkanäle bestimmt. Dieser konstruktive Zusammenhang gilt unabhängig davon, ob der zylindrische Mantel dieses Sammeiraum als Stellelement genutzt wird oder nicht. Das entstehende Volumen wird jedoch in dieser Größenordnung nicht benötigt. Dies ist von Nachteil, da in den ohnehin beengten Einbauräumen für die Motoren in Kraftfahrzeugen unnötig Platz verschenkt wird.

Es ist bekannt, den zylindrischen Sammelraum für den Einbau anderer Komponenten des Luftführungssystems zu verwenden. Gemäß der GB 10 12 425 wird z. B. der Einbau einer Rundfilterpatrone vorgeschlagen, wobei diese sich an den Stirnwänden des Saugrohrgehäuses dichtend abstützt. Der Einbau einer Rundfilterpatrone in der obengenannten Weise bedeutet jedoch, daß auf eine Verstellmöglichkeit des . Saugrohrs verzichtet werden muß. Dies ist auf die Problematik zurückzuführen, daß die Rundfilterpatrone mit dem ortsfesten Lufteinlaß des Saugrohrs kommunizieren muß. Auf eine Verstellung des Saugrohrs kann aber aufgrund der Anforderung an die Motorleistung bzw. den Wirkungsgrad der zugehörigen Brennkraftmaschine in vielen Fällen nicht verzichtet werden.

Die WO 98/35 146 beschreibt eine Ansaugvorrichtung für eine Brennkraftmaschine. Diese Ansaugvorrichtung verfügt über Ansaugrohre, welche in ihrer Länge veränderbar ausgeführt sind. Zum Verändern der Ansaugrohrlänge ist ein Drehschieber vorgesehen, in welchen die Ansaugluft eintritt. Der Drehschieber verfügt über eine Öffnung, durch welche die angesaugte Luft in das Ansaugrohr gelangen kann. Durch Rotation des Drehschiebers wird die Öffnung derart positioniert, dass die Ansaugluft an unterschiedlichen Stellen in das Ansaugrohr eintritt. Nachteilig bei dieser Ansaugvorrichtung ist, dass der Drehschieber einen sehr großen Bauraum benötigt.

Es ist daher Aufgabe der Erfindung, ein Saugrohr zu schaffen, welches durch Anordnung eines beweglichen Sammelraum-Mantels eine Verstellung der Saugkanallänge erlaubt und gleichzeitig den durch die Baueinheit benötigten Einbauraum optimal nutzt.

Dieser Aufgabe wird durch die Merkmale des Patentanspruchs 1 gelöst.

Das erfindungsgemäße Saugrohr besitzt einen Sammelraum, in den der Einlaß für die Verbrennungsluft mündet. Dieser Sammelraum wird von einem Schaltelement gebildet, welches Durchführungen zu den ringförmigen Saugkanälen aufweist. Durch Drehung des Schaltelementes wird eine Längenverstellung der Saugkanäle hervorgerufen. Die Saugkanäle führen zu den zylinderseitigen Austritten, wo die Verbrennungsluft in den Zylinderkopf der Brennkraftmaschine eingeleitet wird.

Im Hinblick auf die Anforderungen an die Luftführung ist der Querschnitt des Sammelraums überdimensioniert. Daher wird dieses Volumen genutzt, um weitere Funktionskomponenten des Ansaugtrakts dort einzubauen. Vorteilhafterweise können die Komponenten entweder mit dem Schaltelement oder mit dem Gehäuse fest verbunden werden. Um eine Abstützung im jeweils anderen Bauteil zu erreichen, muß hier eine bewegliche Lagerung vorgesehen werden. Dies wird insbesondere bei Bauteilen mit größerer Abmessung notwendig, da diese sich im Sammetraum in einer pulsierenden Luftströmung befinden und daher auf Schwingung beansprucht werden. Weiterhin ist es auch möglich, die Funktionskomponenten sowohl im Saugrohr als auch im Schaltelement beweglich zu lagern.

Es wird hierbei ein Volumen genutzt, welches für das Saugrohr ohnehin zur Verfügung gestellt werden muß. Somit wird der Einbauraum gespart, welchen die genannten Funktionskomponenten im Motorraum einnehmen würden, wenn sie nicht im Saugrohr untergebracht werden könnten. Zusätzlich wird eine höhere Integrationsdichte der Komponenten des Motoraggregates erzielt. Folge ist eine Verringerung des Endmontageaufwandes. Die kompakte Bauweise führt weiterhin zu einer Gewichtsreduzierung.

Eine sinnvolle Ausgestaltung der Erfindung sieht als Funktionskomponente eine Luftfilterpatrone vor. Diese kommuniziert rohseitig mit dem Einlaß des Saugrohres. Nach dem Durchtritt der Ansaugluft durch das Filtermedium gelangt diese in den eigentlichen Sammelraum des Saugrohrs. Vorteilhaft ist eine feste Verbindung zwischen dem Einlaßstutzen des Saugrohrs für die ungefilterte Verbrennungsluft und dem rohseitigen Einlaß der bevorzugt zylindrischen Filterpatrone. Eine drehbare Lagerung kann an der dem Lufteinsatz gegenüberliegenden Stirnwand des Stellelementes erfolgen. Grundsätzlich ist aber auch eine feste Lagerung der Filterpatrone im Stellelement möglich, so daß eine bewegliche Verbindung zwischen Filterpatrone und Einlaß erforderlich wird.

Einer weiteren Ausgestaltung des Erfindungsgedankens gemäß kann die Komponente aus einem oder mehreren Resonanzvolumen bestehen, die mittels Öffnung mit dem Saugrohrvolumen kommunizieren. Diese Volumina wirken als Dämpfer für unerwünschte, sich im Saugrohr aufbauende Luftschwingungen. Durch diese Maßnahme kann insofern das akustische Verhalten des Saugrohrs verbessert werden.

Es ist vorteilhaft, für die Resonanzvolumina Teile der Wandung des Stellelementes zu nutzen. Daher liegt es nahe, die Resonanzvolumina fest mit dem Stellelement zu verbinden. Durch eine entsprechende Lagerung im Saugrohrgehäuse können die Öffnungen, die die Resonanzvolumina mit dem Saugrohrvolumen verbinden, verschlossen und geöffnet werden. Hierbei kann die durch die Stellung der Saugkanallänge erforderliche Relativbewegung zwischen Stellelement und Saugrohrgehäuse genutzt werden. Die erforderlichen Resonanzvolumen zur Dämpfung der jeweils unerwünschten Schwingungszustände im Saugrohr können dann in Abhängigkeit vom Betriebszustand des Motors zugeschaltet werden. Es ist hierbei auch die partielle Zuschaltung durch schrittweises Öffnen einer oder mehrerer Öffnungen zu den Resonanzvolumina denkbar. Die Unterbringung zusätzlicher Funktionskomponenten im Sammelraum des Saugrohrs führt zu einer besseren Nutzung des Motorraums.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in den Zeichnungen anhand von schematischen Ausführungsbeispielen beschrieben. Hierbei zeigen
- Figur 1: den Querschnitt durch ein Saugrohr mit einem als Schaltwalze ausgeführten Stellelement, in das ein Breitbandresonator integriert ist,
- Figur 2: den Längsschnitt durch ein Saugrohr mit als Schaltwalze ausgeführtem Stellelement entsprechend Figur 1, in das zwei Helmholtz-Resonatoren integriert sind und
- Figur 3: den Längsschnitt durch ein Saugrohr mit als Schaltwalze ausgeführtem Stellelement entsprechend Figur 1, in das eine Rundfilterpatrone eingebaut ist.

### Beschreibung der Ausführungsbeispiele

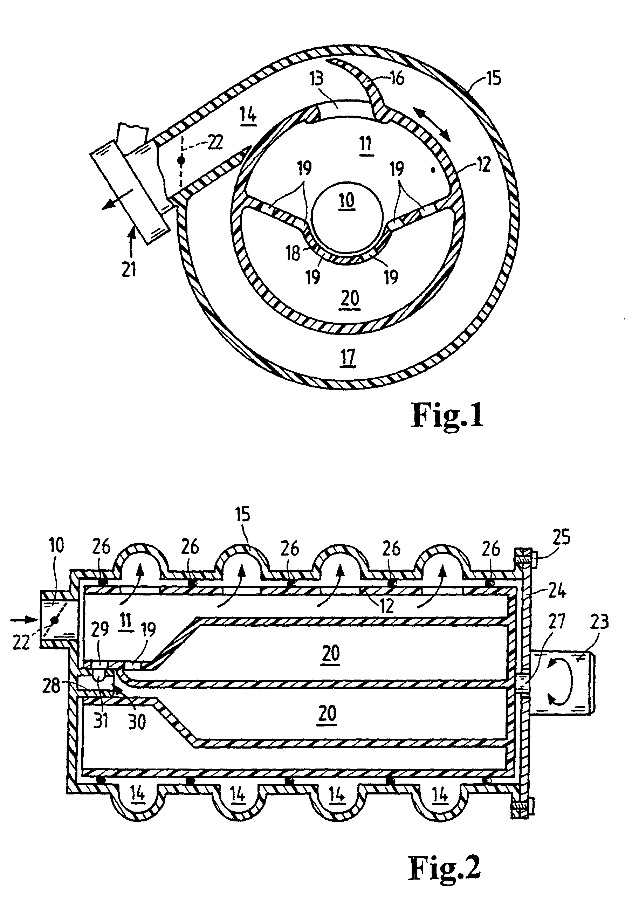

Gemäß Figur 1 läßt sich der Weg, den die Ansaugluft durch das Saugrohr nimmt, nachvollziehen. Sie tritt durch einen Einlaß 10 in einen Sammelraum 11, der durch ein im wesentlichen zylindrisches Stellelement 12 gebildet wird, ein. Durch Durchlässe 13 im Stellelement 12 gelangt die Ansaugluft in Saugkanäle 14, die durch Teile der Innenwandung eines das Saugrohr bildenden Gehäuses 15 und durch die Außenwandung des Stellelements 12 gebildet werden und das Stellelement ringförmig umgeben. Durch Austritte 21 gelangt die Ansaugluft in den nicht dargestellten Zylinderkopf einer Brennkraftmaschine. Je nach Winkelstellung des Stellelementes 12, welches sich um seine Längsachse (senkrecht zur Bildebene) verdrehen läßt, ergibt sich durch die Lage des Durchlasses 13 die Länge des Saugkanals 14 bzw. eines jenseits einer Zunge 16 liegenden Totraums 17. Von dem Sammelraum ist durch eine Zwischenwand 18, die mit Durchbrüchen 19 versehen ist, ein als Breitbandresonator wirkendes Resonatorvolumen 20 abgeteilt. Während der Sammelraum 11 zum Einlaß 10 hin offen ist, ergibt das Resonatorvolumen 20 abgesehen von den Durchbrüchen 19 ein geschlossenes Volumen. Kurz vor dem Austritt 21 des Saugrohrs kann eine Drosselklappe 22 (gestrichelt dargestellt) vorgesehen werden. Dies ist besonders dann sinnvoll, wenn der Sammelraum zur Unterbringung des Luftfilters genutzt wird. In diesem Fall würde eine am Einlaß 10 angeordnete, zentrale Drosselklappe im Rohluftbereich des Ansaugsystems der Brennkraftmaschine arbeiten, wodurch aufgrund von Verschmutzungsgefahr die Bauteilzuverlässigkeit herabgesetzt würde.

Weitere Details zur Funktion des Saugrohrs lassen sich Figur 2 entnehmen. Das Stellelement 12 wird durch einen Motor 23 angetrieben, welcher in einem Deckel 24 des Gehäuses 15 angebracht ist. Der Deckel verschließt unter Zuhilfenahme von Befestigungsmitteln 25 die Einbauöffnung für das Stellelement 12. Das Stellelement ist topfförmig aufgebaut, wobei die offene Seite dem Einlaß 10 zugewandt ist, um die Einleitung der Verbrennungsluft zu ermöglichen. Im Einlaß ist eine Drosselklappe 22 (gestrichelt dargestellt) angeordnet. Die einzelnen Saugkanäle 14 sind durch Gleitringdichtungen 26 voneinander abgetrennt. Sie befinden sich im Spalt zwischen dem Gehäuse 15 und dem Stellelement 12. Das Stellelement ist weiterhin auf einer Motorwelle 27 und direkt im Gehäuse 15 gelagert. im Sammelraum 11 befinden sich zwei Resonatorvolumina 20, wobei der eine durch den Durchbruch 19 in jedem Betriebszustand des Saugrohrs mit dem Sammelraum 11 verbunden ist und der andere durch Lagerung auf einem Hohlzapfen 28 nur dann wirksam wird, wenn eine Bohrung 29 im Hohlzapfen 28 mit einem Schlitz 31 in einem Resonatorhals 30 zur Deckung kommt, so daß eine Verbindung zwischen Resonatorvolumen und Sammelraum 11 geschaffen wird. Natürlich können auch beide Resonatorvolumina zuschaltbar ausgeführt sein. In diesem Fall müßte der Hohlzapfen 28 einen größeren Innendurchmesser aufweisen, so daß der Resonatorhals 30 in den Hohlzapfen eingesteckt werden kann.

## Patentansprüche

1. Verstellbares Saugrohr, insbesondere zur Luftzuführung von Verbrennungsluft in eine Verbrennungskraftmaschine, umfassend ein Gehäuse (15)
- mit einem Einlass (10),
- der in einen Sammelraum (11) mit mindestens einem von diesem abzweigenden Saugkanal (14) mündet,
- wobei der Sammelraum von einem Stellelement (12), welches beweglich gelagert ist, gebildet ist und
- mit mindestens einem zylinderseitigen Austritt (21) pro Saugkanal (14),
wobei im Volumen des Sammelraumes (11) mindestens eine weitere Komponente des Ansaugtraktes der Brennkraftmaschine untergebracht ist, **dadurch gekennzeichnet, dass** diese Komponente aus mindestens einem Resonanzvolumen (20) besteht, wobei das Resonanzvolumen (20) im Sammelraum (11) durch mindestens eine Zwischenwand (18), die mindestens eine Öffnung (19, 29, 31) aufweist, gebildet ist und ein geschlossenes Volumen ergibt.

2. Saugrohr nach Anspruch 1, **dadurch gekennzeichnet, dass** die Komponente (20, 32) fest mit dem Stellelement (12) verbunden ist.

3. Saugrohr nach Anspruch 1, **dadurch gekennzeichnet, dass** die Komponente (20, 32) fest mit dem Gehäuse (15) verbunden ist.

4. Saugrohr nach einem der vorherigen Ansprüche, **dadurch gekennzeichnet, dass** die Komponente (20, 32) beweglich im Stellelement (12) und/oder im Gehäuse (15) gelagert ist.

5. Saugrohr nach einem der vorherigen Ansprüche, **dadurch gekennzeichnet, dass** mindestens eine Öffnung (19, 29, 31) durch Verstellung des Stellelementes (12) verschlossen und geöffnet werden kann.

## Claims

1. Adjustable induction pipe, more especially for supplying combustion air to an internal combustion engine, said pipe including a housing (15)
- having an inlet (10),
- which opens into a collecting chamber (11) provided with at least one suction duct (14) which branches-off from said chamber,
- the collecting chamber being formed by a control element (12), which is displaceably mounted, and said housing having
- at least one discharge means (21) per suction duct (14) on the cylinder side,
at least one additional component of the intake duct of the internal combustion engine being accommodated in the volume of the collecting chamber (11),
**characterised in that** said additional component comprises at least one resonance volume (20), the resonance volume (20) being formed in the collecting chamber (11) by at least one intermediate wall (18), which has at least one aperture (19, 29, 31), and said volume producing a closed volume.

2. Induction pipe according to claim 1, **characterised in that** the component (20, 32) is securedly connected to the control element (12).

3. Induction pipe according to claim 1, **characterised in that** the component (20, 32) is securedly connected to the housing (15).

4. Induction pipe according to one of the previous claims, **characterised in that** the component (20, 32) is displaceably mounted in the control element (12) and/or in the housing (15).

5. Induction pipe according to one of the previous claims, **characterised in that** at least one aperture (19, 29, 31) can be closed and opened by adjusting the control element (12).

## Revendications

1. Tubulure d'admission réglable notamment pour l'alimentation en air de combustion d'un moteur à combustion interne comprenant un boîtier (15) ayant :
- une entrée (10),
- l'entrée débouche dans une chambre collectrice (11) avec au moins un canal d'admission (14) dérivant de celle-ci,
- la chambre collectrice est formée par un élément d'actionnement (12) monté de manière mobile,
- au moins une sortie (21) du côté du cylindre pour chaque canal d'admission (14), et dans le volume de la chambre collectrice (11) on a logé au moins un autre composant de la tubulure d'admission du moteur à combustion interne,
**caractérisée en ce que**
les composants comprennent au moins un volume résonnant (20), formé dans la chambre collectrice (11) par au moins une cloison (18) ayant au moins une ouverture (19, 29, 31) réalisant un volume fermé.

2. Tubulure d'admission selon la revendication 1,
**caractérisée en ce que**
les composants (20, 32) sont reliés solidairement à l'élément d'actionnement (12).

3. Tubulure d'admission selon la revendication 1,
**caractérisée en ce que**
les composants (20, 32) sont reliés solidairement au boîtier (15).

4. Tubulure d'admission selon l'une quelconque des revendications précédentes,
**caractérisée en ce que**
les composants (20, 32) sont montés de manière mobile dans l'élément d'actionnement (12) et/ou dans le boîtier (15).

5. Tubulure d'admission selon l'une quelconque des revendications précédentes,
**caractérisée par**
au moins une ouverture (19, 29, 31) qui se ferme et s'ouvre par le déplacement de l'élément d'actionnement (12).
